# FASCICULE DE BREVET EUROPEEN

(11) **EP 3 519 328 B1**
(45) Date de publication et mention de la délivrance du brevet: **02.11.2022**
(21) Numéro de dépôt: 17778229.9
(22) Date de dépôt: 20.09.2017
(51) Int. Cl.: B65G 1/04

(54) **DISPOSITIF DE PRÉHENSION DE CHARGES DE TAILLES VARIABLES ET PROCÉDÉ D'ADAPTATION DE LARGEUR DE PRÉHENSION CORRESPONDANT**
VORRICHTUNG ZUM GREIFEN VON LASTEN VARIABLER GRÖSSE UND ENTSPRECHENDES VERFAHREN ZUR ANPASSUNG DER GREIFBREITE
DEVICE FOR GRIPPING LOADS OF VARIABLE SIZES AND CORRESPONDING METHOD FOR ADAPTING GRIPPING WIDTH

(30) Priorité: 27.09.2016 FR 1659139
(43) Date de publication de la demande: 07.08.2019
(73) Titulaire: Savoye, 21000 Dijon (FR)
(72) Inventeur: MARIUSSE, Adrien, 71370 Ouroux Sur Saone (FR); GODOT, Erwann, 21000 Dijon (FR)
(74) Mandataire: Vidon Brevets & Stratégie
(86) Numéro de dépôt international: PCT/EP2017/073791
(87) Numéro de publication internationale: WO 2018/060031

(56) Documents cités:
- EP-A1- 0 733 563
- WO-A1-2012/044734
- WO-A1-2015/069105

## Description

### 1. DOMAINE DE L'INVENTION

La présente invention se rapporte au domaine de la manutention de charges.

La présente invention concerne plus particulièrement un dispositif de préhension de charge (aussi appelé « préhenseur ») conçu pour pouvoir manipuler des charges de tailles variables. Un tel dispositif peut être mis en œuvre par exemple sur une navette motorisée (aussi appelée chariot de collecte et de transport) ou un transstockeur pour entrepôt de stockage et/ou de préparation logistique. Une navette ou un transstockeur est un appareil de manutention autonome conçu pour se déplacer dans une zone de stockage afin d'y déposer ou retirer des charges.

L'invention a de nombreuses applications dans le domaine de la logistique notamment, telles que le stockage automatisé et/ou la préparation de colis.

### 2. ARRIÈRE-PLAN TECHNOLOGIQUE

Les navettes de transport sont traditionnellement mise en œuvre au sein d'un système automatisé de préparation de colis afin d'acheminer de manière efficace et automatique des charges d'un magasin de stockage jusqu'à un convoyeur ou un poste de prélèvement ou de préparation des colis.

Un magasin de stockage comprend généralement plusieurs niveaux de rangements superposés dans lesquels les navettes assurent le déplacement des charges, pour leur mise en place à l'intérieur d'emplacements de stockage et pour leur prélèvement depuis ces emplacements. Ces navettes peuvent non seulement se déplacer horizontalement à un niveau donné, mais aussi être amenées d'un niveau à un autre par des élévateurs. De manière classique, un magasin de stockage comprend plusieurs allées de stockage chacune desservant de part et d'autre une étagère de stockage (ou rayonnage) à plusieurs niveaux de rangements superposés dans lesquels les navettes assurent de manière autonome le déplacement des charges. A chaque niveau de rangement, sont prévues des voies pour le déplacement horizontal des navettes. Un élévateur est disposé à une extrémité de l'allée. Une voie est généralement formée de deux rails parallèles et la navette est équipée de roues motrices pour assurer le déplacement sur ces rails.

Un exemple d'une telle navette est décrit dans le document de brevet EP 2 526 032 B1, qui divulgue un dispositif de préhension d'une charge selon le préambule de la revendication 1. Cette navette comprend un châssis en deux parties et une surface de support de charge entre les deux parties de châssis, chaque partie de châssis étant munie de roues. Les roues sont entraînées en rotation par un moteur de translation pour assurer le déplacement de la navette sur un chemin de roulement. La navette comprend un premier et un deuxième bras de préhension, montés respectivement sur la première et la deuxième partie de châssis et configurés pour déplacer une charge depuis ou vers la zone de support de charge. La navette est en outre équipée de moyens d'ajustement de largeur, de tels moyens étant configurés pour adapter la largeur entre les premier et deuxième bras de préhension, afin de permettre la préhension de charges de différentes largeurs. Cette solution connue propose comme moyens d'ajustement de largeur un ensemble de raccordement reliant les deux parties de châssis et permettant de faire varier l'espace entre ces deux parties de châssis et donc la largeur entre les deux bras de préhension. Dans un premier mode de réalisation, l'ensemble de raccordement comprend un moteur dédié qui actionne un engrenage à pignon engagé avec une barre crémaillère. Dans un deuxième mode de réalisation, l'ensemble de raccordement comprend un moteur dédié qui actionne un ensemble comprenant une poulie et une courroie.

Toutefois, de tels moyens d'ajustement nécessitent l'utilisation d'un système mécanique complexe et une motorisation dédiée pour régler la largeur entre les bras de préhension en fonction des dimensions de la charge. Cette solution n'est donc pas optimale tant en termes de coûts qu'en termes d'encombrement et de poids.

### 3. OBJECTIFS DE L'INVENTION

L'invention, dans au moins un mode de réalisation, a notamment pour objectif de pallier ces inconvénients de l'état de la technique.

Plus précisément, dans au moins un mode de réalisation de l'invention, un objectif est de proposer un dispositif de préhension de charge qui soit simple à mettre en œuvre, économique, et d'encombrement et de poids réduit.

### 4. EXPOSÉ DE L'INVENTION

Dans un mode de réalisation particulier de l'invention, il est proposé un dispositif de préhension d'une charge comprenant :
- un châssis comprenant des première et deuxième parties de châssis définissant une zone de support de charge ;
- des moyens de translation configurés pour actionner des moyens de déplacement du châssis le long d'une voie de déplacement ;
- un premier et un deuxième bras de préhension, montés respectivement sur la première et la deuxième partie de châssis, et configurés pour déplacer une charge depuis ou vers ladite zone de support ; et
- des moyens d'ajustement de largeur, configurés pour adapter une largeur entre les premier et deuxième bras de préhension ;
les moyens de translation étant compris dans la deuxième partie de châssis et lesdits moyens d'ajustement de largeur comprenant :
- des premiers moyens de verrouillage/déverrouillage de la première partie de châssis par rapport à la voie de déplacement ;
- des deuxièmes moyens de verrouillage/déverrouillage de la deuxième partie de châssis par rapport à la première partie de châssis ; et
- lesdits moyens de translation,
de sorte que, pour une adaptation de largeur entre les premier et deuxième bras de préhension les premiers moyens de verrouillage/déverrouillage verrouillent la première partie de châssis par rapport à la voie de déplacement, les deuxièmes moyens de verrouillage/déverrouillage déverrouillent la deuxième partie de châssis par rapport à la première partie de châssis, et lesdits moyens de translation actionnent les moyens de déplacement pour un déplacement de la deuxième partie de châssis le long de la voie de déplacement.

Ainsi l'invention repose sur une approche tout à fait nouvelle et inventive d'ajustement de largeur de préhension. En effet, le principe consiste en une nouvelle manière d'utiliser les moyens de translation du dispositif de préhension, pour les combiner à de nouveaux moyens de verrouillage/déverrouillage, de façon à réaliser un ajustement de la largeur entre les premier et deuxième bras de préhension. Les moyens de translation selon l'invention remplissent ainsi deux fonctions : la fonction classique de translation qui permet au dispositif de se mouvoir sur la voie via les moyens de déplacement, et une fonction secondaire d'ajustement de la largeur de préhension lorsque ces moyens de translation sont combinés avec les moyens de verrouillage/déverrouillage des première et deuxième parties de châssis. Les interactions entre les différents moyens de l'invention produisent un véritable effet de synergie puisque les moyens de translation utilisés pour réaliser la fonction classique de translation du châssis sont réutilisés ici pour réaliser une autre fonction (ajustement de largeur) lorsqu'ils sont combinés avec les moyens de verrouillage/déverrouillage. Les moyens d'ajustement de largeur selon la présente invention sont relativement simples et peu coûteux à mettre en œuvre. Ils présentent par ailleurs un encombrement et un poids réduit comparativement aux solutions connues de l'état de la technique.

Selon un aspect particulier de l'invention, les moyens d'ajustement de largeur (c'est-à-dire les premiers et deuxièmes moyens de verrouillage/déverrouillage ainsi que lesdits moyens de translation) sont pilotés par une unité de contrôle compris dans le dispositif de préhension.

Selon une caractéristique particulière, les premiers moyens de verrouillage/déverrouillage sont compris dans la première partie de châssis et comprennent au moins un premier organe électromagnétique ou électromécanique coopérant avec la voie.

Ce type d'organes est simple et peu coûteux à mettre en œuvre,tout en présentant un encombrement réduit.

Selon une caractéristique particulière, les deuxièmes moyens de verrouillage/déverrouillage comprennent au moins un deuxième organe électromagnétique ou électromécanique coopérant avec un moyen de liaison lequel est mécaniquement solidaire de l'une des première et deuxième partie de châssis.

Si le deuxième organe électromagnétique coopère avec la deuxième partie de châssis, alors le moyen de liaison est fixé à la première partie de châssis. Inversement, si le deuxième organe électromagnétique coopère avec la première partie de châssis, alors le moyen de liaison est fixé à la deuxième partie de châssis. Ces éléments sont par ailleurs simples et peu coûteux à mettre en œuvre, tout en présentant un encombrement réduit.

Selon un aspect particulièrement avantageux de l'invention, les première et deuxième parties de châssis comprennent des moyens de guidage autorisant un guidage à coulissement de la première partie de châssis par rapport à la deuxième partie de châssis.

Ainsi, grâce à ces moyens de guidage, lorsque lesdits moyens de translation actionnent les moyens de déplacement en combinaison avec les moyens de verrouillage/déverrouillage, le déplacement en translation de la deuxième partie de châssis par rapport à la première partie de châssis s'en trouve facilité.

Selon une caractéristique particulière, ladite première et ladite deuxième parties de châssis sont munies respectivement d'une première et deuxième paires de roues adaptées pour se déplacer sur la voie, les moyens de translation étant configurés pour actionner les roues de ladite deuxième paire uniquement.

Ainsi, seules les roues situées sur la deuxième partie de châssis sont motorisées, ce qui permet un contrôle simple des moyens d'ajustement de largeur.

Dans un autre mode de réalisation de l'invention, il est proposé un procédé d'adaptation d'une largeur entre des premier et deuxième bras de préhension du dispositif de préhension selon la revendication 6.

Ainsi par simples actions de verrouillage pour maintenir en position la première partie de châssis et de déverrouillage pour rendre mobile en translation la deuxième partie de châssis, l'invention propose une solution simple pour adapter la largeur de préhension aux dimensions de la charge à déplacer. L'adaptation de largeur s'effectue par activation des moyens translation pour actionner les moyens de déplacement de façon à déplacer en translation la deuxième partie de châssis le long de la voie et à adapter la largeur entre les premier et deuxième bras de préhension. Une fois l'adaptation de largeur effectuée, la première partie de châssis par rapport à la voie est déverrouillée, la deuxième partie de châssis par rapport à la première partie de châssis est verrouillée et les bras de préhension sont actionnés pour déplacer la charge depuis ou vers ladite zone de support avec la largeur adaptée.

Selon une caractéristique particulière, le procédé comprend une étape préalable de déplacement du châssis pour positionner la première partie de châssis en fonction d'un emplacement d'un premier côté de la charge (correspondant à une première face latérale de la charge par exemple), la première partie de châssis étant déverrouillée par rapport à la voie et la deuxième partie de châssis étant verrouillée par rapport à la première partie de châssis, ladite étape d'adaptation étant effectuée en fonction d'un emplacement d'un deuxième côté de la charge (correspondant à une deuxième face latérale de la charge par exemple).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1 à 4 représentent différentes vues en perspective d'un dispositif de préhension, selon un mode de réalisation particulier de l'invention, implémenté sur une navette de transport ;
- la figure 5 présente un organigramme d'un mode de réalisation particulier du procédé d'adaptation selon l'invention ;
- les figures 6A à 6D représentent des vues schématiques illustrant les principales étapes du procédé décrit à la figure 5 ;
- la figure 7 présente la structure d'une unité de contrôle pour un mode de réalisation particulier de l'invention.

### 6. DESCRPTION DÉTAILLÉE

Sur toutes les figures du présent document, les éléments et étapes identiques sont désignés par une même référence numérique.

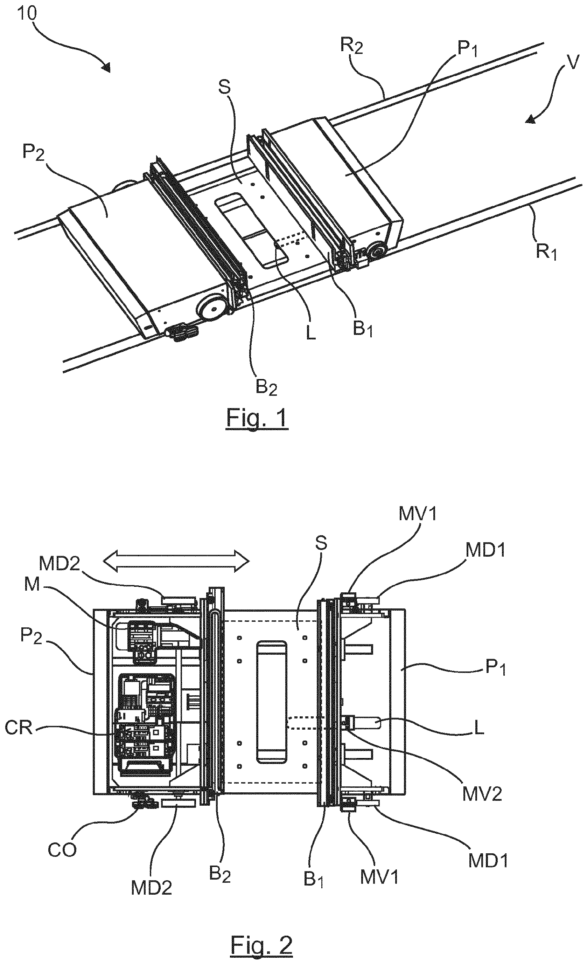

On présente, en relation avec les **figures 1 à 4****,** la structure d'un dispositif de préhension selon un mode de réalisation particulier de l'invention. Dans ce mode de réalisation particulier, le dispositif de préhension est mis en œuvre sur une navette de transport 10. A titre d'exemple, il peut s'agir d'une navette circulant dans un magasin de stockage d'un système automatisé de préparation de colis.

Le dispositif de préhension décrit ici comprend un châssis, lequel est constitué d'une première et d'une deuxième parties de châssis P1 et P2 définissant une zone de support de charge S.

Le dispositif de préhension comprend un premier et un deuxième bras de préhension B1 et B2, montés respectivement sur la première et la deuxième partie de châssis P1 et P2. Les deux bras de préhension B1 et B2 sont configurés pour déplacer une charge depuis ou vers la zone de support S. Les deux bras de préhension B1 et B2 peuvent saisir une charge depuis un emplacement de stockage donné et la transférer vers la zone de support S ou saisir la charge située sur la zone de support S et la transférer vers un emplacement de stockage donné du magasin de stockage. Chaque bras de préhension est motorisé et repose par exemple sur un fonctionnement télescopique. D'autres types de bras de préhension, assurant la même fonction, peuvent bien entendu être envisagés sans sortir du cadre de l'invention.

Les première et deuxième parties de châssis P1 et P2 comprennent respectivement une première et deuxième paires de roues (moyens de déplacement référencés MD1 et MD2 sur les figures) adaptées pour se déplacer sur la voie de déplacement V. La voie de déplacement dans cet exemple est horizontale et constituée de deux rails parallèles R1 et R2.

Les moyens de déplacement du châssis illustrés ici comprennent des roues MD1, MD2. Il est clair que d'autres types de moyens de déplacement peuvent être envisagés sans sortir du cadre de l'invention, tels que des modules à lévitation magnétique pour un guidage magnétique du châssis sur la voie de déplacement par exemple.

La deuxième partie de châssis comprend un moteur de translation M configuré pour actionner les roues MD2 de la deuxième paire uniquement (en d'autres termes, seules les roues MD2 sont motorisées) de manière à déplacer le châssis sur la voie de déplacement V. Le moteur de translation M coopère avec un codeur de mouvement absolu CO pour positionner le châssis sur la voie de déplacement en fonction de l'emplacement de stockage de la charge dans le magasin de stockage. Le moteur de translation M et le codeur CO forment les moyens de translation du dispositif selon l'invention.

Le dispositif de préhension selon l'invention comprend en outre des moyens d'ajustement de largeur configurés pour adapter la largeur entre les premier et deuxième bras de préhension (notée ci-après « large de préhension » ou « largeur de prise de charge »). Ces moyens d'ajustement de largeur comprennent :
- des premiers moyens de verrouillage/déverrouillage MV1, configurés pour prendre deux états: un état verrouillé et un état déverrouillé empêchant et autorisant, respectivement, le déplacement de la première partie de châssis P1 par rapport à la voie de déplacement ;
- des deuxièmes moyens de verrouillage/déverrouillage MV2, configurés pour prendre deux états: un état verrouillé et un état déverrouillé empêchant et autorisant, respectivement, le déplacement de la deuxième partie de châssis P2 par rapport à la première partie de châssis P1 ;
- les moyens de translation M et CO discutés plus haut.

De manière générale, le principe est que, pour adapter la largeur entre les premier et deuxième bras de préhension à une charge donnée :
- les premiers moyens de verrouillage/déverrouillage MV1 sont placés dans l'état verrouillé (pour verrouiller la première partie de châssis P1 par rapport à la voie de déplacement) de telle sorte que la première partie de châssis P1 soit maintenue en position,
- les deuxièmes moyens de verrouillage/déverrouillage MV2 sont placés dans l'état déverrouillé (pour déverrouiller la deuxième partie de châssis P2 par rapport à la première partie de châssis P1) de telle sorte que la deuxième partie de châssis P2 soit rendue mobile en translation, et
- les moyens de translation M et CO actionnent les roues MD2 de la deuxième paire pour déplacer la deuxième partie de châssis P2 le long de la voie (ce déplacement est symbolisé par une double flèche sur les figures 2, 3 et 4).

Ainsi, au lieu d'utiliser un moteur dédié et un système mécanique complexe pour adapter la largeur de préhension à la charge, les moyens d'ajustement selon l'invention réutilise de manière astucieuse les moyens de translation du dispositif de préhension et les combine à de nouveaux moyens de verrouillage/déverrouillage, pour réaliser la fonction d'adaptation de largeur. Les moyens d'ajustement selon l'invention sont donc plus simples et moins coûteux à mettre en œuvre. Ils présentent de plus l'avantage de réduire l'encombrement global et le poids du dispositif.

Selon une mise en œuvre particulière, les premiers moyens de verrouillage/déverrouillage MV1 comprennent une paire de ventouses électromagnétiques. Chaque ventouse électromagnétique est montée sur une face latérale distincte de la première partie de châssis P1 et comprend au moins un aimant permanent de manière à interagir électromagnétiquement avec un des rails métallique de la voie de déplacement V en vue de réaliser un verrouillage/déverrouillage de la première partie de châssis P1 par rapport à la voie de déplacement V. Il s'agit là d'un exemple illustratif et d'autres types d'organes de verrouillage/déverrouillage remplissant la même fonction peuvent être envisagés, comme par exemple des organes de verrouillage/déverrouillage électromécaniques. Par ailleurs, le nombre d'organes de verrouillage/déverrouillage n'est pas limité à deux. On pourrait envisager un nombre plus important d'organes de verrouillage/déverrouillage ou bien n'en prévoir qu'un seul, sans sortir du cadre de l'invention, tant que le nombre, la nature et la configuration choisis permettent d'assurer le verrouillage/déverrouillage de la première partie de châssis P1 par rapport à la voie de déplacement V.

Selon une mise en œuvre particulière, les deuxièmes moyens de verrouillage/déverrouillage MV2 comprennent une ventouse électromagnétique MV2 montée sur la face inférieure de la deuxième partie de châssis P2. La ventouse électromagnétique MV2 comprend par exemple un ou plusieurs aimants permanents coopérant électromagnétiquement avec un élément de liaison métallique L lequel est mécaniquement solidaire de la deuxième partie de châssis P2. Comme illustré sur les figures 1, 2, 5A et 5B, l'élément de liaison L est mécaniquement solidaire de la deuxième partie de châssis P2 par l'intermédiaire du support de charge (S) compris entre les deux parties de châssis du dispositif. Le support de charge (S) comprend une extrémité libre côté première partie de châssis P1 et une extrémité non libre fixée à la deuxième partie de châssis P2. On pourrait bien entendu envisager de fixer l'élément de liaison L directement sur la deuxième partie de châssis P2 sans passer par la zone de support de charge S. De même, à titre d'alternative, au lieu de monter la ventouse électromagnétique MV2 sur la première partie de châssis P1, une configuration inverse pourrait consister à monter la ventouse électromagnétique dans la deuxième partie de châssis P2 et à fixer solidairement l'élément de liaison à la première partie de châssis P1. Le matériau de l'élément de liaison L doit être choisi de façon à être suffisamment rigide pour permettre de rendre solidaire les deux parties de châssis P1 et P2 et de façon à interagir électromagnétiquement avec la ventouse électromagnétique MV2. Comme pour les premiers moyens de verrouillage/déverrouillage, l'exemple décrit ici pour les deuxièmes moyens de verrouillage/déverrouillage est purement illustratif et d'autres types d'organes de verrouillage/déverrouillage remplissant la même fonction peuvent être envisagés, comme par exemple des organes de verrouillage/déverrouillage électromécaniques. Le nombre d'organes de verrouillage/déverrouillage n'est pas limité à un et peut être plus important en fonction de la force d'attraction magnétique souhaitée pour rendre solidaire les deux parties de châssis P1 et P2.

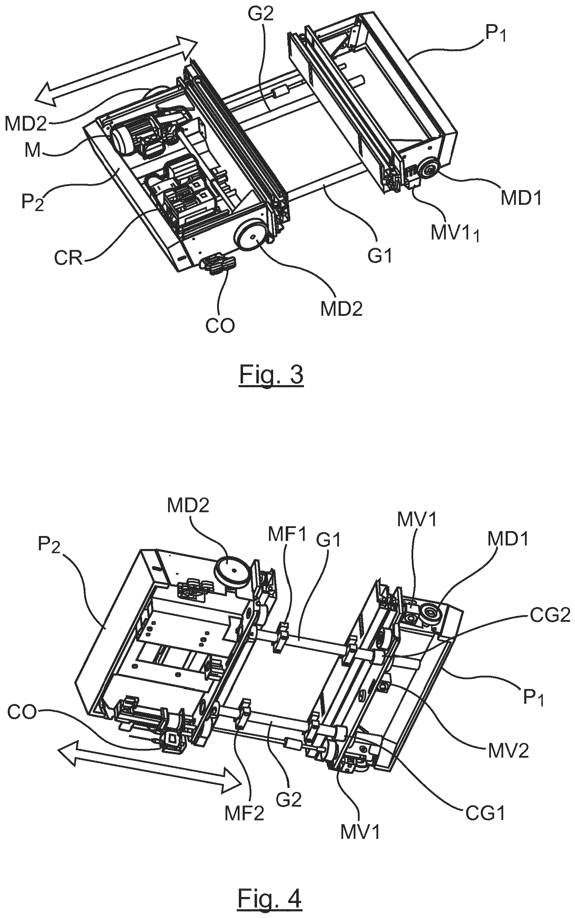

Selon une mise en œuvre particulière, le dispositif comprend des moyens de guidage autorisant un guidage à coulissement des deux parties de châssis l'une par rapport à l'autre. Les moyens de guidage illustrés sur les figures 3 et 4, sont formés d'une première et deuxième tiges cylindriques G1 et G2 coopérant avec un premier et un deuxième canaux de guidage CG1 et CG2 situés sur la face inférieure de la première partie de châssis P2. Les première et deuxième tiges G1 et G2 présentent chacune une première extrémité non libre fixée solidairement à la deuxième partie de châssis P2, et une deuxième extrémité libre, non fixée, comprise dans la deuxième partie de châssis P2. Les premier et deuxième canaux de guidage CG1 et CG2 sont arrangés pour permettre un guidage à coulissement axial des première et deuxième tiges cylindriques G1 et G2 respectivement parallèlement à l'axe de déplacement de la navette 10 sur la voie V. De tels moyens de guidage ont pour effet de faciliter le déplacement en translation de la deuxième partie de châssis P2 par rapport à la première partie de châssis P1 lorsque les moyens d'ajustement de largeur sont activés. Les deux tiges cylindriques G1 et G2 peuvent également prévoir des moyens de fixations MF1 et MF2 pour se fixer au support de charge du dispositif.

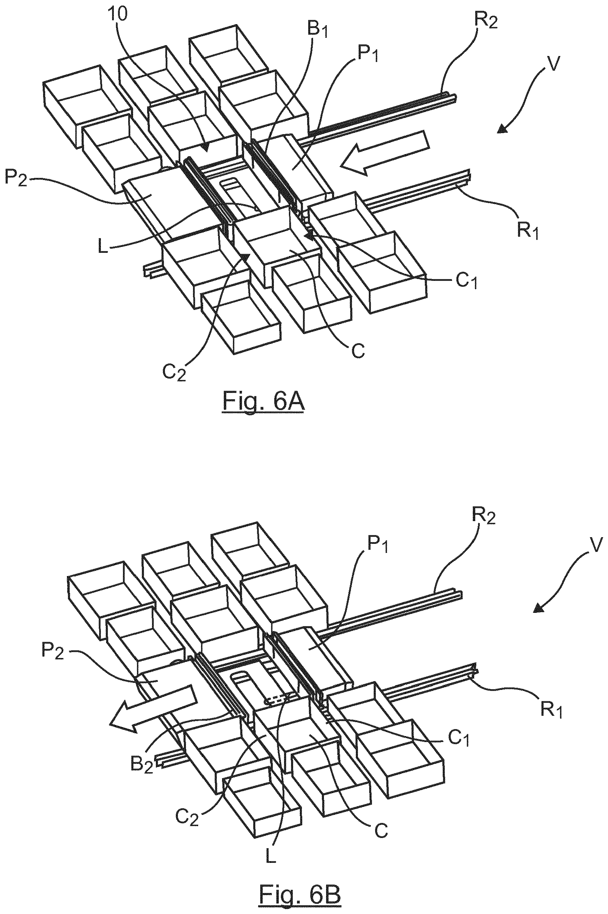

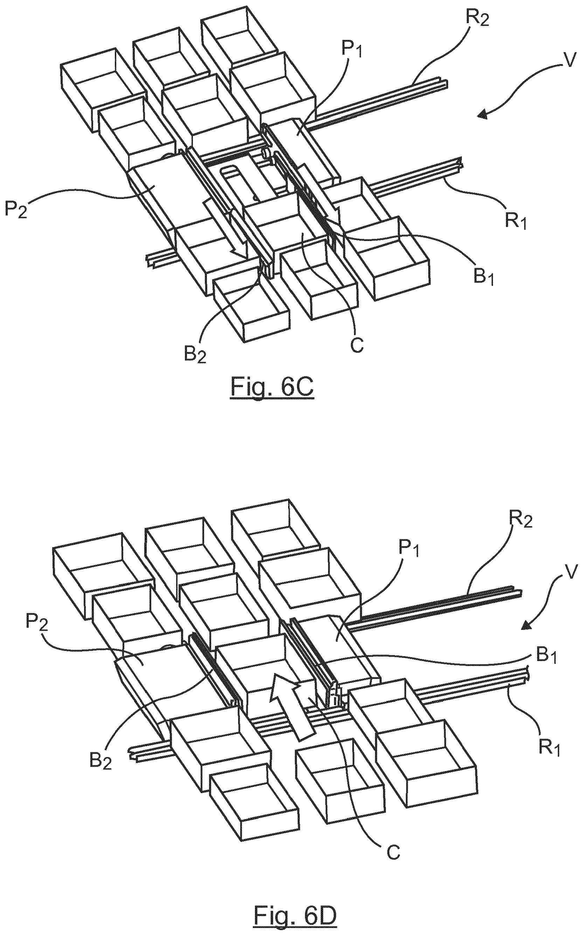

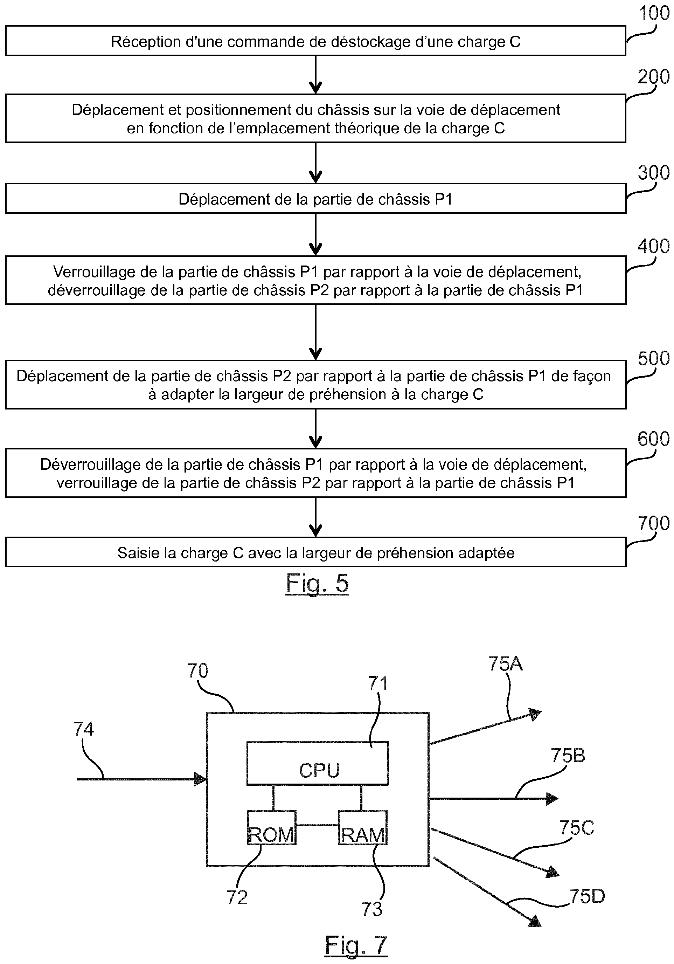

On présente ci-après, en relation avec la **figure 5** et les **figures 6A-6D****,** le procédé d'ajustement de largeur selon un mode de réalisation particulier de l'invention. Dans ce mode de réalisation, le procédé est mis en œuvre par une unité de contrôle, référencée « CR », comprise dans la deuxième partie de châssis P2 de la navette 10 (comme illustré sur les figures 2 et 3). L'unité de contrôle CR est configurée d'une part pour contrôler les déplacements de la navette 10 au sein du magasin de stockage et d'autre part pour piloter les moyens d'ajustement de largeur précités afin d'adapter la largeur entre les deux bras de préhension B1 et B2 à la taille de la charge à saisir.

Le procédé s'inscrit ici dans une séquence de retrait ou de déstockage d'une charge du magasin de stockage afin de l'acheminer vers un système de convoyeurs qui se chargera de l'amener vers un poste de prélèvement. On rappelle à ce titre que le système automatisé de préparation de colis comprend un système de gestion central configuré pour piloter l'ensemble du système : le magasin de stockage, l'ensemble de convoyeurs et les postes de prélèvement.

Une commande de déstockage d'une charge est transmise par le système de gestion central à l'unité de contrôle CR (par exemple au moyen d'une transmission sans-fil du type Wi-Fi). La commande de déstockage comprend une information relative à l'emplacement de stockage théorique de la charge à déstocker dans le magasin (par exemple des données de localisation de la charge dans le magasin). La charge à déstocker est notée « C » sur les figures 6A-6D.

Sur réception de la commande de déstockage, l'unité de contrôle CR initialise le procédé **(étape 100).** Les premiers moyens de verrouillage/déverrouillage (ventouses MV1) sont alors placés dans l'état déverrouillé, et les deuxièmes moyens de verrouillage/déverrouillage (ventouse MV2) dans l'état verrouillé.

A **l'étape 200,** l'unité de contrôle CR transmet une commande de déplacement aux moyens de translation afin d'actionner les moyens de déplacement MD2 du châssis de la navette 10. Sur réception de la commande de déplacement, le moteur de translation M coopère avec le codeur de mouvement absolu CO pour déplacer et positionner le châssis sur la voie de déplacement V en fonction de l'emplacement de stockage théorique de la charge C.

A proximité de l'emplacement de stockage théorique, l'unité de contrôle CR active alors son système de détection d'obstacle (à base d'au moins un capteur d'image) afin de détecter les contours de la charge C, et en particulier l'emplacement des deux faces latérales C1 et C2 de la charge C destinées à entrer en contact avec les bras du dispositif de préhension. Il s'agit des deux faces latérales de côté de la charge C. Dans la suite des étapes du procédé, l'unité de contrôle CR va procéder à la mise en configuration de préhension des deux bras de préhension B1 et B2 du dispositif. Cette mise en configuration est effectuée en fonction de l'emplacement des faces latérales C1 et C2 respectivement déterminé par le système de détection d'obstacle.

A **l'étape 300,** l'unité de contrôle CR transmet une commande de déplacement aux moyens de translation pour qu'ils positionnent la première partie de châssis P1 de la navette, de manière à ce que le premier bras de préhension B1 se retrouve en configuration de préhension. On entend par « configuration de préhension » le fait que le premier bras de préhension B1 soit placé sensiblement dans l'alignement de la première face latérale C1 de la charge, en vue de venir en contact avec celle-ci. La navette 10 se retrouve à l'arrêt.

A **l'étape 400,** une fois le premier bras de préhension B1 en configuration de préhension, l'unité de contrôle CR procède à la mise en configuration de préhension du deuxième bras de préhension B2. Pour ce faire, l'unité de contrôle CR envoie une commande de verrouillage des premiers moyens de verrouillage/déverrouillage (ventouses MV1) pour qu'ils basculent dans l'état verrouillé, et une commande de déverrouillage des deuxièmes moyens de verrouillage/déverrouillage (ventouse MV2) pour qu'ils basculent dans l'état déverrouillé. A ce moment là, la première partie de châssis P1 se retrouve verrouillée par rapport à la voie de déplacement V (grâce aux ventouses MV1) de sorte que la première partie de châssis P1 est maintenue en position et la deuxième partie de châssis P2 se retrouve déverrouillée par rapport à la première partie de châssis P1 de sorte que la deuxième partie de châssis P2 est rendue mobile en translation.

A **l'étape 500,** l'unité de contrôle CR transmet une commande de déplacement aux moyens de translation afin d'actionner les moyens de déplacement MD2 (autrement dit l'unité de contrôle CR actionne les moyens de déplacement par activation des moyens de translation), en fonction de l'emplacement de la face C2 de la charge C à saisir. Comme la deuxième partie de châssis P2 est rendue mobile indépendamment de la première partie de châssis P1 qui elle est fixe, l'unité de contrôle CR va pouvoir positionner le deuxième bras de préhension B2 monté sur la deuxième partie de châssis P2, de façon à ajuster la largeur entre les deux bras du dispositif en fonction de la taille réelle de la charge C (c'est-à-dire la distance entre les faces C1 et C2). Pour ce faire, les moyens de translation positionnent la deuxième partie de châssis P2 le long de la voie de déplacement V de façon à ce que le deuxième bras de préhension B2 se retrouve en configuration de préhension. On entend par « configuration de préhension » le fait que le deuxième bras de préhension B2 soit placé sensiblement dans l'alignement de la deuxième face latérale C2 de la charge, en vue de venir en contact avec celle-ci.

La largeur entre les deux bras de préhension B1 et B2 est maintenant adaptée à la charge C. L'unité de contrôle CR va procéder à la saisie de la charge C.

A **l'étape 600,** une fois les deux bras de préhension B1 et B2 en configuration de préhension, l'unité de contrôle CR envoie une commande de déverrouillage aux premiers moyens de verrouillage/déverrouillage (ventouses MV1) pour qu'ils basculent dans l'état déverrouillé, et une commande de verrouillage des deuxièmes moyens de verrouillage/déverrouillage (ventouse MV2) pour qu'ils basculent dans l'état verrouillé. A ce moment là, la première partie de châssis P1 se retrouve déverrouillée par rapport à la voie de déplacement V et la deuxième partie de châssis P2 se retrouve verrouillée par rapport à la première partie de châssis P1 de sorte que les deux parties de châssis P1 et P2 se retrouvent à nouveau mécaniquement solidaires l'un de l'autre.

A **l'étape 700,** l'unité de contrôle CR transmet une commande de saisie à des moyens d'entrainement (non illustrés sur les figures) des bras de préhension B1 et B2, pour permettre aux bras de préhension télescopiques B1 et B2 de saisir et déplacer la charge C depuis son emplacement de stockage vers la zone de support de charge S de la navette 10, avec la largeur adaptée.

Une fois la charge C placée sur la zone de support de charge S de la navette, l'unité de contrôle CR envoie une commande de déplacement aux moyens de translation pour actionner les moyens de déplacement MD2 de façon à acheminer la charge C le long de la voie de déplacement V et en direction de l'ensemble de convoyeurs ou du poste de préparation.

La **figure 7** présente la structure simplifiée d'une unité de contrôle 70 mettant en œuvre le procédé d'adaptation selon l'invention (par exemple le mode de réalisation particulier décrit ci-dessus en relation avec les figures 5, 6A-6D). Ce dispositif comprend une mémoire vive 73 (par exemple une mémoire RAM), une unité de traitement 71, équipée par exemple d'un processeur, et pilotée par un programme d'ordinateur stocké dans une mémoire morte 72 (par exemple une mémoire ROM ou un disque dur). A l'initialisation, les instructions de code du programme d'ordinateur sont par exemple chargées dans la mémoire vive 73 avant d'être exécutées par le processeur de l'unité de traitement 71. L'unité de traitement 71 reçoit en entrée une commande de déstockage d'une charge 74, par exemple envoyée par le système de gestion central du système automatisé de préparation de colis. Le processeur de l'unité de traitement 71 traite la commande de déstockage 74 et génère en sortie des commandes de pilotage destinées aux différents éléments du dispositif de préhension, selon les instructions du programme 72. En particulier, l'unité de traitement 71 délivre en sortie :
- une première commande 75A destinée au pilotage des moyens de translation (pour activer/désactiver les moyens de déplacement du châssis);
- une deuxième commande 75B destinée au pilotage des premiers moyens de verrouillage/déverrouillage (pour verrouiller/déverrouiller la première partie de châssis par rapport à la voie de déplacement) ;
- une troisième commande 75C destinée au pilotage des deuxièmes moyens de verrouillage/déverrouillage (verrouiller/déverrouiller la deuxième partie de châssis par rapport à la première partie de châssis);
- une quatrième commande 75D destinée au pilotage des moyens d'entraînement des bras de préhension (pour étendre/rétracter les bras de préhension).

Un programme d'ordinateur peut être utilisé dans l'unité de contrôle 70 du dispositif de préhension, comprenant des instructions de code de programme pour mettre en œuvre le procédé d'adaptation précité, lorsque ce programme est exécuté sur le processeur 71 de l'unité de contrôle 70.

Cette figure 7 illustre seulement une manière particulière, parmi plusieurs possibles, de réaliser les différents algorithmes détaillés ci-dessus, en relation avec les figures 5, 6A-6D. En effet, ces algorithmes se réalisent indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas d'une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel *(firmware),* etc.

## Revendications

1. Dispositif de préhension d'une charge comprenant :
- un châssis comprenant des première et deuxième parties de châssis (P1, P2) définissant une zone de support de charge (S) ;
- des moyens de translation (M) configurés pour actionner des moyens de déplacement (MD1, MD2) du châssis le long d'une voie de déplacement (V) ;
- un premier et un deuxième bras de préhension (B1, B2), montés respectivement sur la première et la deuxième partie de châssis, et configurés pour déplacer une charge depuis ou vers ladite zone de support ; et
- des moyens d'ajustement de largeur, configurés pour adapter une largeur entre les premier et deuxième bras de préhension ;
**caractérisé en ce que** lesdits moyens d'ajustement de largeur comprennent :
- des premiers moyens de verrouillage/déverrouillage (MV1) de la première partie de châssis par rapport à la voie de déplacement ;
- des deuxièmes moyens de verrouillage/déverrouillage (MV2) de la deuxième partie de châssis par rapport à la première partie de châssis ; et
- lesdits moyens de translation, de sorte que, pour une adaptation de largeur entre les premier et deuxième bras de préhension (B1, B2) les premiers moyens de verrouillage/déverrouillage (MV1) verrouillent la première partie de châssis par rapport à la voie de déplacement, les deuxièmes moyens de verrouillage/déverrouillage (MV2) déverrouillent la deuxième partie de châssis (P2) par rapport à la première partie de châssis (P1), et lesdits moyens de translation (M) actionnent les moyens de déplacement (MD2) pour un déplacement de la deuxième partie de châssis (P2) le long de la voie de déplacement.

2. Dispositif selon la revendication 1, dans lequel les premiers moyens de verrouillage/déverrouillage (MV1) sont compris dans la première partie de châssis (P1) et comprennent au moins un premier organe électromagnétique ou électromécanique coopérant avec la voie.

3. Dispositif selon l'une quelconque des revendications 1 et 2, dans lequel les deuxièmes moyens de verrouillage/déverrouillage (MV2) comprennent au moins un deuxième organe électromagnétique ou électromécanique coopérant avec un moyen de liaison (L) lequel est mécaniquement solidaire de l'une des première et deuxième partie de châssis.

4. Dispositif selon l'une quelconque des revendications 1 à 3, dans lequel les première et deuxième parties de châssis comprennent des moyens de guidage autorisant un guidage à coulissement de la première partie de châssis par rapport à la deuxième partie de châssis.

5. Dispositif selon l'une quelconque des revendications 1 à 4, dans lequel ladite première et ladite deuxième parties de châssis sont munies respectivement d'une première et deuxième paires de roues adaptées pour se déplacer sur la voie, les moyens de translation étant configurés pour actionner les roues de ladite deuxième paire uniquement.

6. Procédé d'adaptation d'une largeur entre des premier et deuxième bras de préhension d'un dispositif de préhension comprenant :
- un châssis comprenant des première et deuxième parties de châssis (P1, P2) définissant une zone de support de charge (S) ;
- des moyens de translation (M) configurés pour actionner des moyens de déplacement (MD1, MD2) du châssis le long d'une voie de déplacement (V),
- un premier et un deuxième bras de préhension (B1, B2), montés respectivement sur la première et la deuxième partie de châssis, et configurés pour déplacer une charge depuis ou vers ladite zone de support ;
- des moyens d'ajustement de largeur, configurés pour adapter une largeur entre les premier et deuxième bras de préhension, et comprenant :
^{∗} des premiers moyens de verrouillage/déverrouillage (MV1) de la première partie de châssis par rapport à la voie de déplacement ;
^{∗} des deuxièmes moyens de verrouillage/déverrouillage (MV2) de la deuxième partie de châssis par rapport à la première partie de châssis ; et
^{∗} lesdits moyens de translation ; le procédé comprenant les étapes suivantes :
- verrouillage (400) de la première partie de châssis (P1) par rapport à la voie, par activation des premiers moyens de verrouillage/déverrouillage (MV1) ;
- déverrouillage (400) de la deuxième partie de châssis (P2) par rapport à la première partie de châssis (P1), par activation des deuxièmes moyens de verrouillage/déverrouillage (MV2) ;
- activation (500) desdits moyens translation pour actionner lesdits moyens de déplacement (MD2) de la deuxième partie de châssis (P2), de façon à déplacer en translation la deuxième partie de châssis (P2) le long de la voie et à adapter une largeur entre les premier et deuxième bras de préhension.

7. Procédé selon la revendication 6, comprenant une étape préalable de déplacement du châssis pour positionner la première partie de châssis en fonction d'un emplacement d'un premier côté (C1) de la charge, la première partie de châssis étant déverrouillée par rapport à la voie et la deuxième partie de châssis étant verrouillée par rapport à la première partie de châssis, ladite étape d'activation étant effectuée en fonction d'un emplacement d'un deuxième côté (C2) de la charge.

## Patentansprüche

1. Vorrichtung zum Greifen einer Last, umfassend:
- einen Rahmen, umfassend ein erstes und ein zweites Rahmenteil (P1, P2), die einen Lasttragebereich (S) definieren,
- Translationsmittel (M), die konfiguriert sind, um Bewegungsmittel (MD1, MD2) des Rahmens entlang einer Bewegungsbahn (V) zu betätigen,
- einen ersten und einen zweiten Greifarm (B1, B2), die jeweils an dem ersten und dem zweiten Rahmenteil befestigt sind und konfiguriert sind, um eine Last zu oder von dem Tragebereich zu bewegen, und
- Breiteneinstellmittel, die konfiguriert sind, um eine Breite zwischen dem ersten und dem zweiten Greifarm anzupassen,
**dadurch gekennzeichnet, dass** die Breiteneinstellmittel aufweisen:
- erste Mittel zum Verriegeln/Entriegeln (MV1) des ersten Rahmenteils in Bezug auf die Bewegungsbahn,
- zweite Mittel zum Verriegeln/Entriegeln (MV2) des zweiten Rahmenteils in Bezug auf das erste Rahmenteil, und
- die Translationsmittel,
derart, dass für eine Breitenanpassung zwischen dem ersten und dem zweiten Greifarm (B1, B2) die ersten Mittel zum Verriegeln/Entriegeln (MV1) das erste Rahmenteil in Bezug auf die Bewegungsbahn verriegeln, die zweiten Mittel zum Verriegeln/Entriegeln (MV2) das zweite Rahmenteil (P2) in Bezug auf das erste Rahmenteil (P1) entriegeln und die Translationsmittel (M) die Bewegungsmittel (MD2) für eine Bewegung des zweiten Rahmenteils (P2) entlang der Bewegungsbahn betätigen.

2. Vorrichtung nach Anspruch 1, wobei die ersten Mittel zum Verriegeln/Entriegeln (MV1) im ersten Rahmenteil (P1) enthalten sind und mindestens ein erstes elektromagnetisches oder elektromechanisches Organ aufweisen, das mit der Bahn zusammenwirkt.

3. Vorrichtung nach einem der Ansprüche 1 und 2, wobei die zweiten Mittel zum Verriegeln/Entriegeln (MV2) mindestens ein zweites elektromagnetisches oder elektromechanisches Organ aufweisen, das mit einem Verbindungsmittel (L) zusammenwirkt, das mit einem des ersten und zweiten Rahmenteils mechanisch fest verbunden ist.

4. Vorrichtung nach einem der Ansprüche 1 bis 3, wobei das erste und das zweite Rahmenteil Führungsmittel aufweisen, die ein gleitendes Führen des ersten Rahmenteils in Bezug auf das zweite Rahmenteil ermöglichen.

5. Vorrichtung nach einem der Ansprüche 1 bis 4, wobei das erste und das zweite Rahmenteil jeweils mit einem ersten und einem zweiten Paar Rädern ausgestattet sind, die geeignet sind, um sich auf der Bahn zu bewegen, wobei die Translationsmittel konfiguriert sind, um nur die Räder des zweiten Paares zu betätigen.

6. Verfahren zum Anpassen einer Breite zwischen dem ersten und dem zweiten Greifarm einer Vorrichtung zum Greifen, umfassend:
- einen Rahmen, umfassend ein erstes und ein zweites Rahmenteil (P1, P2), die einen Lasttragebereich (S) definieren,
- Translationsmittel (M), die konfiguriert sind, um Bewegungsmittel (MD1, MD2) des Rahmens entlang einer Bewegungsbahn (V) zu betätigen,
- einen ersten und einen zweiten Greifarm (B1, B2), die jeweils an dem ersten und dem zweiten Rahmenteil befestigt sind und konfiguriert sind, um eine Last zu oder von dem Tragebereich zu bewegen,
- Breiteneinstellmittel, die konfiguriert sind, um eine Breite zwischen dem ersten und dem zweiten Greifarm anzupassen, und umfassend:
- erste Mittel zum Verriegeln/Entriegeln (MV1) des ersten Rahmenteils in Bezug auf die Bewegungsbahn,
- zweite Mittel zum Verriegeln/Entriegeln (MV2) des zweiten Rahmenteils in Bezug auf das erste Rahmenteil, und
- die Translationsmittel,
wobei das Verfahren die folgenden Schritte aufweist:
- Verriegeln (400) des ersten Rahmenteils (P1) in Bezug auf die Bahn durch Aktivieren der ersten Mittel zum Verriegeln/Entriegeln (MV1),
- Entriegeln (400) des zweiten Rahmenteils (P2) in Bezug auf das erste Rahmenteil (P1) durch Aktivieren der zweiten Mittel zum Verriegeln/Entriegeln (MV2),
- Aktivieren (500) der Translationsmittel, um die Bewegungsmittel (MD2) des zweiten Rahmenteils (P2) derart zu betätigen, um das zweite Rahmenteil (P2) entlang der Bahn translatorisch zu bewegen und um eine Breite zwischen dem ersten und dem zweiten Greifarm anzupassen.

7. Verfahren nach Anspruch 6, umfassend einen vorausgehenden Schritt des Bewegens des Rahmens, um das erste Rahmenteil in Abhängigkeit von einer Lage einer ersten Seite (C1) der Last zu positionieren, wobei das erste Rahmenteil in Bezug auf die Bahn verriegelt wird und wobei das zweite Rahmenteil in Bezug auf das erste Rahmenteil verriegelt wird, wobei der Schritt des Aktivierens in Abhängigkeit von einer Lage einer zweiten Seite (C2) der Last durchgeführt wird.

## Claims

1. A device for gripping a load comprising:
- a frame comprising first and second frame portions (P1, P2) defining a load support area (S);
- translation means (M) configured to actuate means for moving (MD1, MD2) the frame along a path of travel (V);
- a first and a second gripping arm (B1, B2) mounted respectively on the first and the second frame portions and configured to move a load from or to said support area; and
- width-adjustment means, configured to adapt a width of the first and second gripping arms;
**characterised in that** said width-adjustment means comprise:
- first means for locking/unlocking (MV1) the first frame portion relative to the path of travel;
- second means for locking/unlocking (MV2) the second frame portion relative to the first frame portion; and
- said translation means,
so that, for an adjustment of width between the first and second gripping arms (B1, B2) the first locking/unlocking means (MV1) lock the first frame portion relative to the path of travel, the second locking/unlocking means (MV2) unlock the second frame portion (P2) relative to the first frame portion (P1), and said translation means (M) actuate the movement means (MD2) for a displacement of the second frame portion (P2) along the path of travel.

2. The device according to claim 1, wherein the first locking/unlocking means (MV1) are comprised in the first frame portion (P1) and comprise at least one first electromagnetic or electromechanical member cooperating with the path.

3. The device according to any one of claims 1 and 2, wherein the second locking/unlocking means (MV2) comprise at least a second electromagnetic or electromechanical member cooperating with a connection means (L) which is mechanically integral with one of the first and second frame portions.

4. The device according to any one of claims 1 to 3, wherein the first and second frame portions comprise guide means allowing to slidably guide the first frame portion relative to the second frame portion.

5. The device according to any one of claims 1 to 4, wherein said first and said second frame portions are respectively provided with a first and second pair of wheels adapted to move on the path, the translation means being configured to actuate the wheels of said second pair only.

6. A method for adapting a width of first and second gripping arms of a gripping device comprising:
- a frame comprising first and second frame portions (P1, P2) defining a load support area (S);
- translation means (M) configured to actuate means for moving (MD1, MD2) the frame along a path of travel (V),
- a first and a second gripping arm (B1, B2) mounted respectively on the first and the second frame portion and configured to move a load from or to said support area;
- width-adjustment means, configured to adapt a width of the first and second gripping arms, and comprising:
- first means for locking/unlocking (MV1) the first frame portion relative to the path of travel;
- second means for locking/unlocking (MV2) the second frame portion relative to the first frame portion; and
- said translation means;
the method comprising the following steps:
- locking (400) the first frame portion (P1) relative to the path, by activating the first locking/unlocking means (MV1);
- unlocking (400) the second frame portion (P2) relative to the first frame portion (P1), by activating the second locking/unlocking means (MV2);
- activating (500) said translation means to actuate said means for moving (MD2) the second frame portion (P2), so as to move the second frame portion (P2) in translation along the path and to adapt a width of the first and second gripping arms.

7. The method according to claim 6, comprising a preliminary step of moving the frame to position the first frame portion according to a location on a first side (C1) of the load, the first frame portion being unlocked relative to the path and the second frame portion being locked relative to the first frame portion, said activation step being carried out according to a location of a second side (C2) of the load.
